(19) Europäisches Patentamt
European Patent Office
Office européen des brevets

(11) **EP 4 564 114 A1**

(12) **EUROPEAN PATENT APPLICATION**
published in accordance with Art. 153(4) EPC

(43) Date of publication:
04.06.2025 Bulletin 2025/23

(51) International Patent Classification (IPC):
**G05D 1/00** (2024.01)

(21) Application number: 23871700.3

(86) International application number:
**PCT/JP2023/031633**

(22) Date of filing: 30.08.2023

(87) International publication number:
**WO 2024/070460 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.09.2022 JP 2022158638

(71) Applicant: HONDA MOTOR CO., LTD.
Minato-ku
Tokyo 107-8556 (JP)

(72) Inventors:
• **AIZAWA, Koki**
Wako-shi, Saitama 351-0193 (JP)
• **WAKAYAMA, Ryoji**
Wako-shi, Saitama 351-0193 (JP)
• **KURAMITSU, Yunosuke**
Wako-shi, Saitama 351-0193 (JP)
• **MATSUNAGA, Hideki**
Wako-shi, Saitama 351-0193 (JP)

(74) Representative: Kiwit, Benedikt
Mitscherlich PartmbB
Patent- und Rechtsanwälte
Karlstraße 7
80333 München (DE)

(54) **MOBILE BODY CONTROL SYSTEM, CONTROL METHOD THEREFOR, PROGRAM, AND MOBILE BODY**

(57) A moving object control system of the present invention comprises accumulating information on an obstacle detected in a past for each divided region obtained by dividing peripheral regions of a moving object; causing information on the accumulated obstacle to be forgotten in accordance with a predetermined forgetting rate allocated to each divided region; acquiring a captured image; detecting an obstacle included in the captured image; and generating an occupancy map indicating occupancy of an obstacle for each divided region in accordance with information on the accumulated obstacle and the detected obstacle for a current peripheral region of the moving object.

**F I G. 6**

SET FORGETTING RATE TO BE HIGH INSIDE VIEWING ANGLE

SET FORGETTING RATE TO BE LOW OUTSIDE VIEWING ANGLE

**Description**

TECHNICAL FIELD

The present invention relates to a moving object control system, a control method, a program, and a moving object.

BACKGROUND ART

In these years, a compact moving object is known such as an electric vehicle called an ultra-compact mobility vehicle (also referred to as a micro-mobility vehicle) each having a riding capacity of about one or two persons, and a mobile robot that provides various types of services to humans. Some of such moving bodies autonomously travel while periodically generating a traveling path to a destination.

PTL 1 proposes a technique of measuring and evaluating the shape of a road surface in detail, generating an obstacle map from the evaluation result, and autonomously traveling by performing path planning using the obstacle map in order to avoid unevenness which is an obstacle. More specifically, proposed is a method of removing a ghost in a moving obstacle while an obstacle map is updated while sequentially reflecting an external measurement result. PTL 2 proposes that an ultrasonic sensor is used to generate a surrounding map that dynamically changes on the basis of sensor information at two different time points. PTL 3 proposes a technique of erasing a non-existent moving object on the basis of a reflection pulse received by a radar sensor and leaving only a highly reliable real image in road map data.

CITATION LIST

PATENT LITERATURE

PTL 1: Japanese Patent Laid-Open No. 2010-102485
PTL 2: Japanese Patent Laid-Open No. 2017-532234
PTL 3: Japanese Patent Laid-Open No. 2019-057197

SUMMARY OF INVENTION

TECHNICAL PROBLEM

The micro-mobility vehicle is compact and requires as little use of hardware resources as possible. Therefore, it is desirable to use one sensor that detects the front periphery of a moving object as the sensor that detects the peripheral situation. In such a configuration, when an obstacle is detected using a detection unit such as a camera, whether to hold or discard accumulated information of the detected obstacle (for example, the forgetting rate) is different for each region around the moving object. This is because a change in the obstacle can be detected within the range of the image captured by the camera, but such a change cannot be detected outside the range.

On the other hand, in a case where a traveling path of autonomous traveling is generated using the detected obstacle information around the moving object, for example, since an obstacle is detected in front of the moving object, it is also conceivable to generate a path passing through the vicinity of the obstacle shifted to the outside the viewing angle so as to detour. In such a case, by accumulating obstacle information detected in the past for a certain period of time, it is possible to generate a path for avoiding an obstacle shifted to the outside the viewing angle.

The present invention has been made in view of the above problems, and an object of the present invention is to suitably set a forgetting rate of information of an obstacle detected around a moving object for each region.

SOLUTION TO PROBLEM

According to the present invention, a moving object control system comprising: accumulating means for accumulating information on an obstacle detected in a past for each divided region obtained by dividing peripheral regions of a moving object; forgetting means for causing information on the obstacle accumulated by the accumulating means to be forgotten in accordance with a predetermined forgetting rate allocated to each divided region; imaging means for acquiring a captured image; detecting means for detecting an obstacle included in the captured image; and map generating means for generating an occupancy map indicating occupancy of an obstacle for each divided region in accordance with information on the obstacle accumulated by the accumulating means and the obstacle detected by the detecting means for a current peripheral region of the moving object.

ADVANTAGEOUS EFFECTS OF INVENTION

According to the present invention, it is possible to suitably set a forgetting rate of information of an obstacle detected around a moving object for each region.

BRIEF DESCRIPTION OF DRAWINGS

FIG. 1A is a block diagram illustrating a configuration example of hardware of a moving object according to the present embodiment.
FIG. 1B is a block diagram illustrating a configuration example of the hardware of the moving object according to the present embodiment.
FIG. 2 is a block diagram illustrating a control configuration of the moving object according to the present embodiment.
FIG. 3 is a block diagram illustrating a functional configuration example of the moving object according to the present embodiment.
FIG. 4 is a diagram illustrating an occupancy grid map according to the present embodiment.
FIG. 5 is a diagram illustrating a method for generating the occupancy grid map according to the present embodiment.
FIG. 6 is a diagram for explaining forgetting of obstacle information according to the present embodiment.
FIG. 7 is a diagram illustrating a global path and a local path according to the present embodiment.
FIG. 8 is a flowchart illustrating a processing procedure for controlling traveling of the moving object according to the present embodiment.
FIG. 9 is a flowchart illustrating a processing procedure for forgetting accumulated obstacle information according to the present embodiment.

DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

<Configuration of moving object>

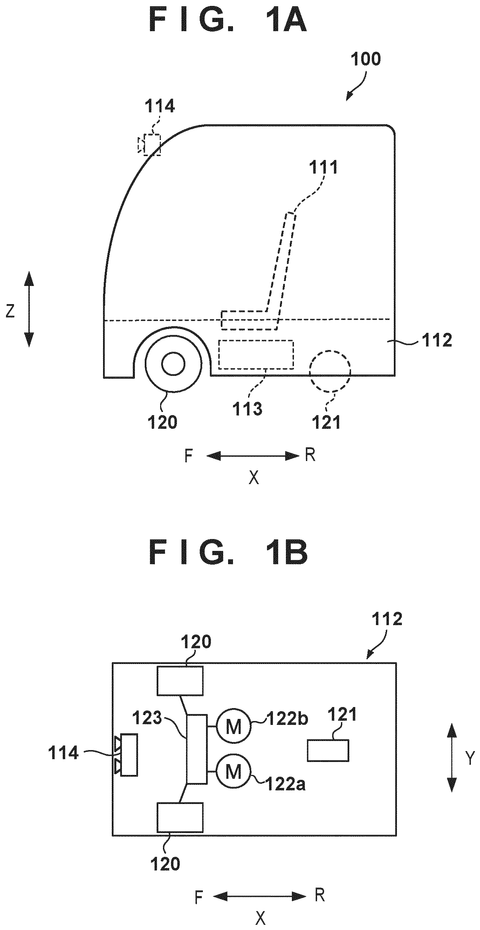

A configuration of a moving object 100 according to the present embodiment will be described with reference to FIG. 1. FIG. 1A illustrates a side view of the moving object 100 according to the present embodiment, and FIG. 1B illustrates an internal configuration of the moving object 100. In the drawings, an arrow X indicates a front-and-rear direction of the moving object 100, and F indicates the front, and R indicates the rear. Arrows Y and Z respectively indicate a width direction (a left-and-right direction) and an up-and-down direction of the moving object 100.

The moving object 100 is equipped with a battery 113, and is, for example, an ultra-compact mobility vehicle that moves mainly by the power of a motor. The ultra-compact mobility vehicle is an ultra-compact vehicle that is more compact than a general automobile and has a riding capacity of about one or two persons. In the present embodiment, an ultra-compact mobility vehicle with three wheels will be described as an example of the moving object 100, but there is no intention to limit the present invention, and for example, a four-wheeled vehicle or a straddle type vehicle may be used. Further, the vehicle of the present invention is not limited to a vehicle, and may be a vehicle loaded with luggage and traveling alongside a person who is walking, or a vehicle leading a person. Furthermore, the present invention is not limited to a four-wheeled or two-wheeled vehicle, and a walking type robot or the like capable of autonomous movement can also be applied.

The moving object 100 is an electric autonomous vehicle including a traveling unit 112 and using the battery 113 as a main power supply. The battery 113 is, for example, a secondary battery such as a lithium ion battery, and the moving object 100 autonomously travels by the traveling unit 112 by electric power supplied from the battery 113. The traveling unit 112 is a three-wheeled vehicle including a pair of left and right front wheels 120 and a tail wheel (driven wheel) 121. The traveling unit 112 may be in another form, such as a four-wheeled vehicle. The moving object 100 includes a seat 111 for one person or two persons.

The traveling unit 112 includes a steering mechanism 123. The steering mechanism 123 uses motors 122a and 122b as a drive source to change a steering angle of the pair of front wheels 120. An advancing direction of the moving object 100 can be changed by changing the steering angle of the pair of front wheels 120. The tail wheel 121 is a driven wheel that does not individually have a drive source but operates following driving of the pair of front wheels 120. Further, the tail wheel 121 is connected to a vehicle body of the moving object 100 with a turning portion. The turning portion rotates such that an orientation of the tail wheel 121 changes separately from the rotation of the tail wheel 121. In this manner, the moving object 100 according to the present embodiment adopts a differential two-wheel mobility vehicle with the tail wheel, but is not limited thereto.

The moving object 100 includes a detection unit 114 that recognizes a plane in front of the moving object 100. The detection unit 114 is an external sensor that monitors the front of the moving object 100, and is an imaging apparatus that captures an image of the front of the moving object 100 in the case of the present embodiment. In the present embodiment, a stereo camera having an optical system such as two lenses and respective image sensors will be described as an example of the detection unit 114. However, instead of or in addition to the imaging apparatus, a radar or a light detection and ranging (LiDAR) can also be used. Further, an example in which the detection unit 114 is provided only in front of the moving object 100 will be described in the present embodiment, but there is no intention to limit the present invention, and the detection unit 114 may be provided at the rear, the left, or right of the moving object 100.

The moving object 100 according to the present embodiment captures an image of a front region of the moving object 100 using the detection unit 114 to detects an obstacle from the captured image. Furthermore, the moving object 100 divides a peripheral region of the moving object 100 into grid cells, and controls traveling while generating an occupancy grid map in which obstacle information is accumulated in each of the grid cells. Details of the occupancy grid map will be described later.

<Control configuration of moving object>

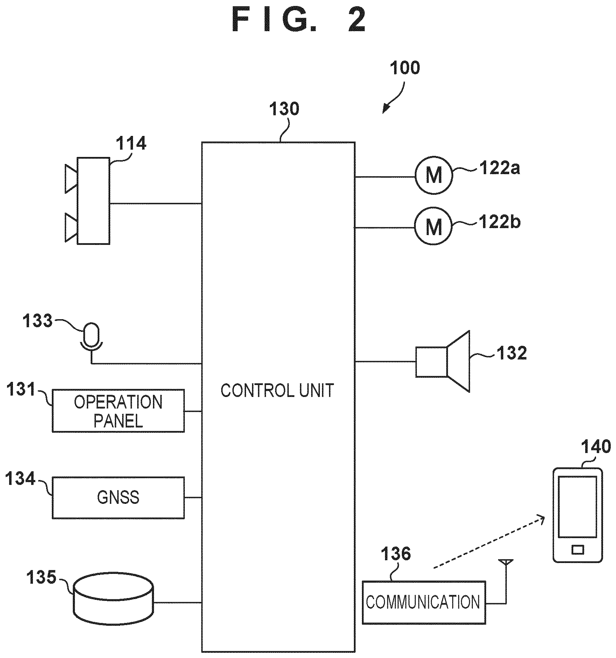

FIG. 2 is a block diagram of a control system of the moving object 100 according to the present embodiment. Here, a configuration necessary for carrying out the present invention will be mainly described. Therefore, any other configuration may be further included in addition to the configuration to be described below. Further, a description is given in the present embodiment assuming that each unit to be described below is included in the moving object 100, but there is no intention to limit the present invention, and a moving object control system including a plurality of devices may be achieved. For example, some functions of a control unit 130 may be achieved by a server apparatus connected to be capable of communicating with each other, or the detection unit 114 or a GNSS sensor 134 may be provided as an external device. The moving object 100 includes the control unit (ECU) 130. The control unit 130 includes a processor represented by a CPU, a storage device such as a semiconductor memory, an interface with an external device, and the like. The storage device stores a program executed by the processor, data used for processing by the processor, and the like. A plurality of sets of the processor, the storage device, and the interface may be provided for each function of the moving object 100 to be able to communicate with one another.

The control unit 130 acquires a detection result of the detection unit 114, input information of an operation panel 131, voice information input from a voice input apparatus 133, position information from the GNSS sensor 134, and reception information via a communication unit 136, and executes corresponding processing. The control unit 130 performs control of motors 122a and 122b (traveling control of the traveling unit 112), display control of the operation panel 131, notification to an occupant of the moving object 100 by voice of a speaker 132, and output of information.

The voice input apparatus 133 can collect a voice of the occupant of the moving object 100. The control unit 130 can recognize the input voice and execute processing corresponding to the recognized input voice. The global navigation satellite system (GNSS) sensor 134 receives a GNSS signal, and detects a current position of the moving object 100. A storage apparatus 135 is a storage device that stores a captured image by the detection unit 114, obstacle information, a path generated in the past, an occupancy grid map, and the like. The storage apparatus 135 may also store a program to be executed by the processor, data for use in processing by the processor, and the like. The storage apparatus 135 may store various parameters (for example, learned parameters of a deep neural network, hyperparameters, and the like) of a machine learning model for voice recognition or image recognition executed by the control unit 130.

The communication unit 136 communicates with a communication apparatus 140, which is an external apparatus, via wireless communication such as Wi-Fi or 5th generation moving object communication. The communication apparatus 140 is, for example, a smartphone, but is not limited thereto, and may be an earphone type communication terminal, a personal computer, a tablet terminal, a game machine, or the like. The communication apparatus 140 is connected to a network via wireless communication such as Wi-Fi or 5th generation moving object communication.

A user who owns the communication apparatus 140 can give an instruction to the moving object 100 via the communication apparatus 140. The instruction includes, for example, an instruction for calling the moving object 100 to a position desired by the user for joining. When receiving the instruction, the moving object 100 sets a target position on the basis of position information included in the instruction. Note that, in addition to such an instruction, the moving object 100 can set the target position from the captured image of the detection unit 114, or can set the target position on the basis of an instruction, received via the operation panel 131, from the user riding on the moving object 100. In the case of setting the target position from the captured image, for example, a person raising a hand toward the moving object 100 in the captured image is detected, and a position of the detected person is estimated and set as the target position.

<Functional configuration of moving object>

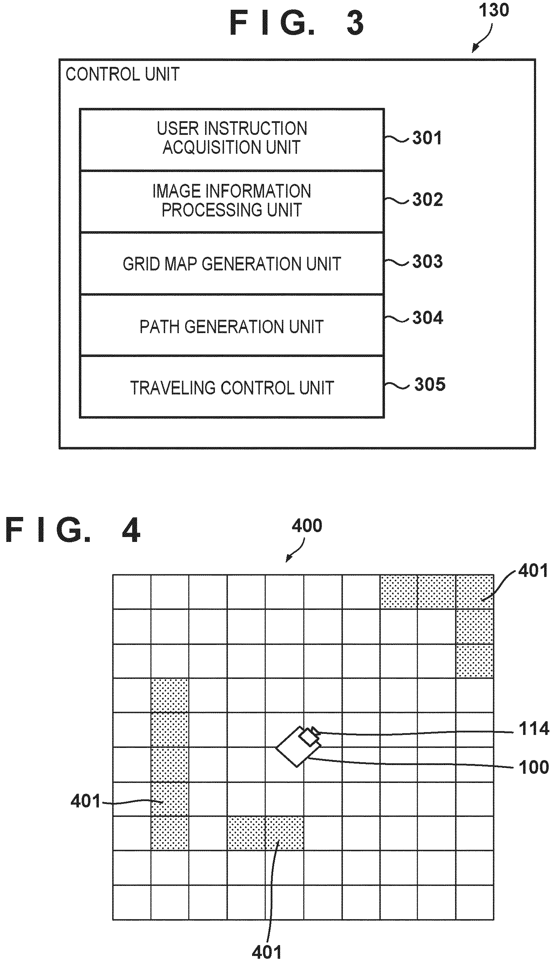

Next, functional configurations of the moving object 100 according to the present embodiment will be described with reference to FIG. 3. The functional configurations described here are achieved by, for example, the CPU in the control unit 130 reading a program stored in a memory such as a ROM into a RAM and executing the program. Note that, the functional configurations described below describe only functions necessary for describing the present invention, and do not describe all of functional configurations actually included in the moving object 100. That is, the functional configuration of the moving object 100 according to the present invention is not limited to the functional configuration to be described below.

A user instruction acquisition unit 301 has a function of receiving an instruction from a user, and can receive a user instruction via the operation panel 131, a user instruction from an external apparatus such as the communication apparatus 140 via the communication unit 136, and an instruction by an utterance of the user via the voice input apparatus 133. As described above, the user instructions include an instruction for setting the target position (also referred to as a destination) of the moving object 100 and an instruction related to traveling control of the moving object 100.

An image information processing unit 302 processes the captured image acquired by the detection unit 114. Specifically, the image information processing unit 302 creates a depth image from a stereo image acquired by the detection unit 114 to obtain a three-dimensional point cloud. Image data converted into the three-dimensional point cloud is used to detect an obstacle that hinders traveling of the moving object 100. The image information processing unit 302 may include a machine learning model that processes image information and execute processing of a learning stage or processing of an inference stage of the machine learning model. The machine learning model of the image information processing unit 302 can perform processing of recognizing a three-dimensional object and the like included in the image information by performing computation of a deep learning algorithm using a deep neural network (DNN), for example.

A grid map generation unit 303 creates a grid map of a predetermined size (for example, in a region of $20\,m \times 20\,m$ with each cell of $10\,cm \times 10\,cm$) on the basis of the image data of the three-dimensional point cloud. This is intended to reduce the amount since the amount of data of the three-dimensional point cloud is large and real-time processing is difficult. The grid map includes, for example, a grid map indicating a difference between a maximum height and a minimum height of an intra-grid point cloud (representing whether or not the cell is a step) and a grid map indicating a maximum height of the intra-grid point cloud from a reference point (representing a topography shape of the cell). Furthermore, the grid map generation unit 303 removes spike noise and white noise included in the generated grid map, detects an obstacle having a predetermined height or more, and generates an occupancy grid map indicating whether or not there is a three-dimensional object as the obstacle for each grid cell.

A path generation unit 304 generates a traveling path of the moving object 100 with respect to the target position set by the user instruction acquisition unit 301. Specifically, the path generation unit 304 generates the path using the occupancy grid map generated by the grid map generation unit 303 from the captured image of the detection unit 114 without requiring obstacle information of a high-precision map. Note that, the detection unit 114 is a stereo camera that captures the image of the front region of the moving object 100, and thus, is not able to recognize obstacles in the other directions. Therefore, it is desirable that the moving object 100 stores detected obstacle information for a predetermined period in order to avoid a collision with an obstacle outside a viewing angle and a stack in a dead end. As a result, the moving object 100 can generate the path in consideration of both an obstacle detected in the past and an obstacle detected in real time.

Further, the path generation unit 304 periodically generates a global path using the occupancy grid map, and further periodically generates a local path so as to follow the global path. That is, a target position of the local path is determined by the global path. In the present embodiment, as a generation cycle of each path, the generation cycle of the global path is set to 100 ms, and the generation cycle of the local path is set to 50 ms, but the present invention is not limited thereto. As an algorithm for generating a global path, various algorithms such as a rapid-exploring random tree (RRT), a probabilistic road map (PRM), and A* are known. Further, since the differential two-wheeled mobility vehicle with the tail wheel is adopted as the moving object 100, the path generation unit 304 generates the local path in consideration of the tail wheel 121 which is the driven wheel.

A traveling control unit 305 controls the traveling of the moving object 100 in accordance with the local path. Specifically, the traveling control unit 305 controls the traveling unit 112 in accordance with the local path to control a speed and an angular velocity of the moving object 100. Further, the traveling control unit 305 controls traveling in response to various operations of a driver. When a deviation occurs in a driving plan of the local path due to an operation of the driver, the traveling control unit 305 may control traveling by acquiring a new local path generated by the path generation unit 304 again, or may control the speed and angular velocity of the moving object 100 so as to eliminate the deviation from the local path in use.

<Occupancy grid map>

FIG. 4 illustrates an occupancy grid map 400 including obstacle information according to the present embodiment. Since the moving object 100 according to the present embodiment travels without depending on obstacle information of a high-precision map, the obstacle information is entirely acquired from a recognition result of the detection unit 114. At this time, it is necessary to store the obstacle information in order to avoid a collision with an obstacle outside a viewing angle or a stack in a dead end. Therefore, in the present embodiment, an occupancy grid map is used as a method of storing the obstacle information from the viewpoint of reduction in the amount of information of a three-dimensional point cloud of a stereo image and ease of handling in path planning.

The grid map generation unit 303 according to the present embodiment divides a peripheral region of the moving object 100 into grids, and generates an occupancy grid map including information indicating the presence or absence of an obstacle for each of the grid cells (divided regions). Note that, an example in which a predetermined region is divided into grid cells will be described here. However, instead of being divided into grid cells, the predetermined region may be divided into other shapes to create an occupancy map indicating the presence or absence of an obstacle for each divided region. In the occupancy grid map 400, a region having a size of, for example, 40 m $\times$ 40 m or 20 m $\times$ 20 m around the moving object 100 is set as the peripheral region, the region is divided into grid cells of 20 cm $\times$ 20 cm or 10 cm $\times$ 10 cm, and is dynamically set in accordance with movement of the moving object 100. That is, the occupancy grid map 400 is a region that is shifted such that the moving object 100 is always at the center in accordance with the movement of the moving object 100 and varies in real time. Note that, any size of the region can be set based on hardware resources of the moving object 100.

Further, in the occupancy grid map 400, presence/absence information of an obstacle detected from the captured image by the detection unit 114 is defined for each grid cell. As the presence/absence information, for example, a travelable region is defined as "0", and a non-travelable region (that is, presence of an obstacle) is defined as "1". In FIG. 4, a reference sign 401 denotes a grid cell in which an obstacle is present. A region where an obstacle is present indicates a region through which the moving object 100 is not able to pass, and includes, for example, a three-dimensional object of 5 cm or more. Therefore, the moving object 100 generates a path so as to avoid these obstacles 401.

<Accumulation of obstacle information>

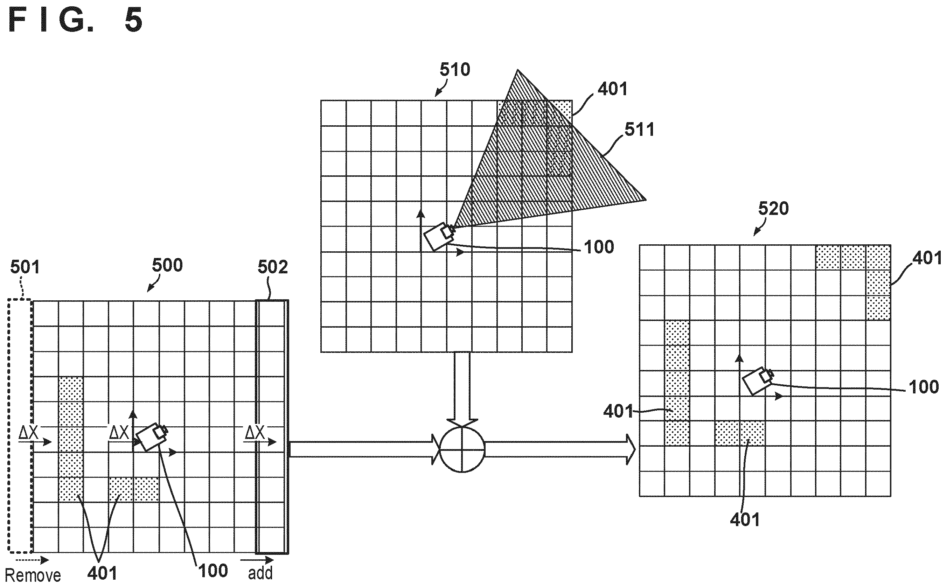

FIG. 5 illustrates accumulation of obstacle information in an occupancy grid map according to the present embodiment. A reference sign 500 denotes a local map that moves in accordance with movement of the moving object 100. A local map 500 is shifted in accordance with the movement of the moving object 100 with respect to an x-axis direction and a y-axis direction on the grid map. The local map 500 illustrates a state in which a dotted line region of 501 is removed and a solid line region of 502 is added according to a movement amount $\Delta x$ of the moving object 100 in the x-axis direction, for example. The region to be removed is a region opposite to an advancing direction of the moving object 100, and the region to be added is a region in the advancing direction. Similarly, regions are also removed and added in the y-axis direction in accordance with the movement of the moving object 100.

Further, the local map 500 accumulates obstacle information detected in the past. When there is an obstacle in a grid cell included in the removed region, the obstacle information is removed from the local map 500, but is desirably held separately from the local map 500 for a certain period of time. Such information is effective, for example, in a case where the moving object 100 changes a course so that the removed region is included in the local map 500 again, and the avoidance accuracy of the moving object 100 with respect to the obstacle can be improved. Further, when the accumulated information is used, it is unnecessary to detect an obstacle again, and a processing load can be reduced.

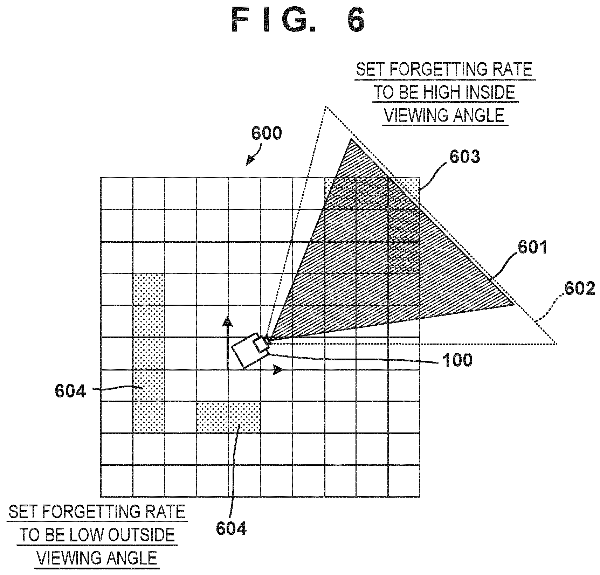

Furthermore, before the local map 500 is added to an obstacle detection map 510 to be described later, the forgetting processing is performed according to the forgetting rate set for each grid cell. In a case where a dynamic obstacle accompanied by movement is detected, if the obstacle information detected in the past and accumulated in a grid cell is continuously held as it is, erroneous detection that an obstacle is present in all the grid cells along the movement trajectory of the obstacle may occur. Therefore, in order to avoid erroneously determining that an obstacle is present in a grid cell through which the obstacle has already passed, it is necessary to forget the accumulated information of the obstacle after a certain period of time has elapsed. Forgetting of the accumulated obstacle information will be described later with reference to FIG. 6.

A Reference sign 510 denotes an obstacle detection map indicating detection information of an obstacle present in front of the moving object 100 from the captured image captured by the detection unit 114 of the moving object 100. The obstacle detection map 510 indicates real-time information, and is periodically generated based on the captured image acquired from the detection unit 114. Note that, since moving obstacles such as a person and a vehicle are also assumed, it is desirable to update the obstacle detection map 510 generated periodically inside a viewing angle 511 of the detection unit 114, which is a front region of the moving object 100, instead of fixing and accumulating obstacles detected in the past. As a result, the moving obstacles can also be recognized, and generation of a path for detouring more than required can be prevented. On the other hand, information on obstacles detected in the past is accumulated in the rear region of the moving object 100 (strictly speaking, it is outside the viewing angle of the detection unit 114) as illustrated in the local map 500. As a result, for example, when an obstacle is detected in the front region and a detour path is generated, it is possible to easily generate a path that avoids collisions with the passed obstacles.

A reference sign 520 denotes an occupancy grid map generated by adding the local map 500 and the obstacle detection map 510. In this manner, an occupancy grid map 520 is generated as a grid map obtained by combining the local map and the obstacle detection information varying in real time with the obstacle information detected and accumulated in the past.

<Forgetting of obstacle information>

FIG. 6 illustrates forgetting of obstacle information on the occupancy grid map according to the present embodiment. A reference sign 600 denotes an occupancy grid map including generated obstacle information 603 and 604 around the moving object 100. A reference sign 601 denotes an actual viewing angle (performance) of the detection unit 114. That is, the viewing angle 601 indicates an imaging range determined by performance of the detection unit 114 such as a stereo camera. A reference sign 602 denotes a range inside viewing angle defined as a range broader than the actual viewing angle 601 at the time of setting the forgetting rate of the obstacle information. As a result, even when the detection accuracy of the obstacle in the end region in the captured image decreases, it is possible to reduce erroneous detection of the obstacle.

In the present embodiment, the forgetting rate is individually set for each grid cell. Here, the forgetting rate indicates how much accumulated obstacle information is held. For example, according to the present embodiment, the occupancy grid map is periodically generated, and the forgetting rate indicates how many cycles the obstacle information is stored.

Specifically, in the present embodiment, the forgetting rate for forgetting the accumulated obstacle information is set to a different value between each grid cell included in the range inside viewing angle 602 and a grid cell not included in the range inside viewing angle 602. For example, a first forgetting rate is set for a grid overlapping the range inside viewing angle 602 illustrated in FIG. 6, and a second forgetting rate lower than the first forgetting rate is set for the other grids. Here, the grid cell overlapping the range inside viewing angle 602 is a grid cell in which a predetermined region or more in the grid cell overlaps the range within viewing angle 602. The size of the predetermined region is arbitrary, and can be set to 1 to 100%, for example.

As described above, according to the present embodiment, the forgetting rate is set to be high for the grid cells inside the viewing angle of the detection unit 114, and the forgetting rate is set to be low for the other regions. With this setting, it is possible to quickly forget the obstacle information inside the viewing angle and take a measure against a dynamic obstacle accompanied by movement. On the other hand, outside the viewing angle, by storing the obstacle information for a certain period of time, it is possible to avoid collision with the obstacle and a stack in a dead end. However, in order to reduce the calculation load of path generation, it is desirable to hold the obstacle information in a predetermined peripheral region of the moving object 100 and to forget the other regions. Therefore, according to the present embodiment, the forgetting rate is set even outside the viewing angle.

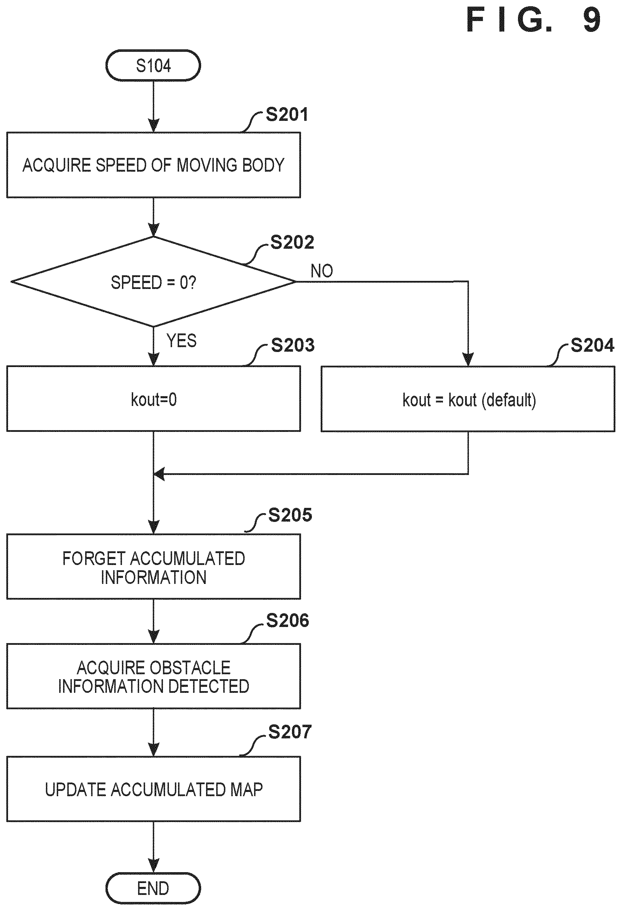

Note that, here, an example will be described in which the forgetting rates different between inside and outside the viewing angle are set, but the forgetting rates may be further individually set in the respective regions. For example, the forgetting rate may be set to be higher as the distance from the moving object 100 is longer outside the viewing angle. Further, the type of obstacle may be discriminated, and the forgetting rate may be changed according to the discriminated type. The type of obstacle includes at least a dynamic obstacle accompanied by movement and a static obstacle not accompanied by movement. The dynamic obstacle is, for example, a vehicle or other traffic participants. The static obstacle is, for example, an obstacle that does not move by itself, and includes an object such as a fixed traffic light or post, a table or a desk that is not fixed but can move, and the like. Further, the forgetting rate may be set to be higher for a region including a shadow in a captured image for detecting an obstacle than for other regions. As a result, even in a case where the detection accuracy of the obstacle in the region including the shadow is low, the influence of the erroneously detected obstacle information can be reduced. Further, in a case where the number of obstacles is large in the grid map or in a case where the ratio of the obstacles is large, the forgetting rate may be set to be high. As a result, it is possible to avoid that the path generation is extremely hindered by the information of the obstacle detected in the past. A specific forgetting processing will be described later with reference to FIG. 9.

<Path generation>

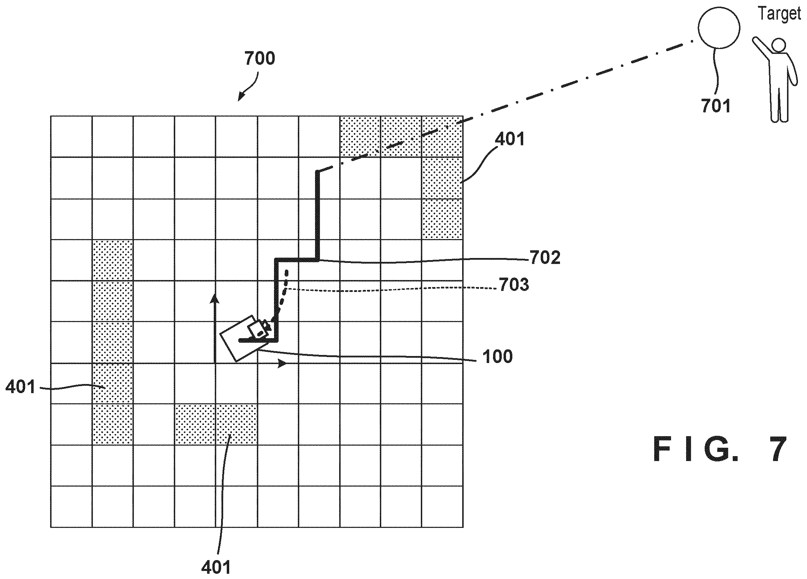

FIG. 7 illustrates a traveling path generated in the moving object 100 according to the present embodiment. The path generation unit 304 according to the present embodiment periodically generates a global path 702 using an occupancy grid map in accordance with a set target position 701, and periodically generates a local path 703 so as to follow the global path.

The target position 701 is set on the basis of various instructions. For example, an instruction from an occupant riding on the moving object 100 and an instruction from a user outside the moving object 100 are included. The instruction from the occupant is performed via the operation panel 131 or the voice input apparatus 133. The instruction via the operation panel 131 may be a method of designating a predetermined grid cell of a grid map displayed on the operation panel 131. In this case, a size of each grid cell may be set to be large, and the grid cell may be selectable from a wider range of the map. The instruction via the voice input apparatus 133 may be an instruction using a surrounding target as a mark. The target may include a pedestrian, a signboard, a sign, equipment installed outdoors such as a vending machine, building components such as a window and an entrance, a road, a vehicle, a two-wheeled vehicle, and the like included in the utterance information. When receiving the instruction via the voice input apparatus 133, the path generation unit 304 detects a designated target from the captured image acquired by the detection unit 114 and sets the target as the target position.

A machine learning model is used for these voice recognition and image recognition. The machine learning model performs, for example, computation of a deep learning algorithm using a deep neural network (DNN) to recognize a place name, a landmark name such as a building, a store name, a target name, and the like included in the utterance information and the image information. The DNN for the voice recognition becomes a learned state by performing the processing of the learning stage, and can perform recognition processing (processing of the inference stage) for new utterance information by inputting the new utterance information to the learned DNN. Further, the DNN for the image recognition can recognize a pedestrian, a signboard, a sign, equipment installed outdoors such as a vending machine, building components such as a window and an entrance, a road, a vehicle, a two-wheeled vehicle, and the like included in the image.

Further, regarding the instruction from the user outside the moving object 100, it is also possible to notify the moving object 100 of the instruction via the owned communication apparatus 140 via the communication unit 136 or call the moving object 100 by an operation such as raising a hand toward the moving object 100 as illustrated in FIG. 7. The instruction using the communication apparatus 140 is performed by an operation input or a voice input similarly to the instruction from the occupant.

When the target position 701 is set, the path generation unit 304 generates the global path 702 using the generated occupancy grid map. As described above, various algorithms such as RRT, PRM, and A* are known as a global path generation method, but any method may be used. Subsequently, the path generation unit 304 generates the local path 703 so as to follow the generated global path 702. As a method of local path planning, there are various methods such as a dynamic window approach (DWA), model predictive control (MPC), clothoid tentacles, and proportional-integral-differential (PID) control.

<Basic control of moving object>

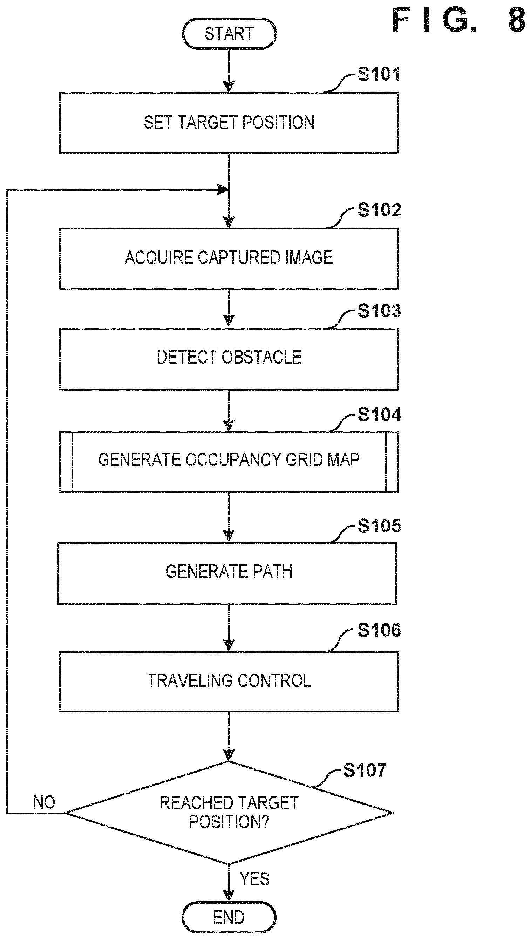

FIG. 8 is a flowchart illustrating basic control of the moving object 100 according to the present embodiment. Processing to be described below is achieved by, for example, the CPU in the control unit 130 reading a program stored in a memory such as a ROM into a RAM and executing the program.

In S101, the control unit 130 sets a target position of the moving object 100 on the basis of a user instruction received by the user instruction acquisition unit 301. The user instruction can be received by various methods as described above. Subsequently, in S102, the control unit 130 captures an image of a front region of the moving object 100 by the detection unit 114 to acquire the captured image. The acquired captured image is processed by the image information processing unit 302, and a depth image is created and converted into a three-dimensional point cloud. In S103, the control unit 130 detects an obstacle that is a three-dimensional object of, for example, 5 cm or more from the image converted into the three-dimensional point cloud. In S104, the control unit 130 generates an occupancy grid map of a predetermined region around the moving object 100 based on the detected obstacle and position information of the moving object 100. A detailed method will be described with reference to FIG. 9.

Next, in S105, the control unit 130 causes the path generation unit 304 to generate a traveling path of the moving object 100. As described above, the path generation unit 304 generates a global path using the occupancy grid map, and generates a local path according to the generated global path. Subsequently, in S106, the control unit 130 determines a speed and an angular velocity of the moving object 100 according to the generated local path, and controls traveling. Thereafter, in S107, the control unit 130 determines whether or not the moving object 100 has reached the target position based on position information from the GNSS sensor 134, and when the moving object 100 does not reach the target position, the control unit 130 returns the processing to S102 to repeatedly perform the processing of generating a path and controlling traveling while updating the occupancy grid map. On the other hand, in a case where the moving object 100 has reached the target position, the processing of this flowchart ends.

<Method of generating occupancy grid map (forgetting control)>

FIG. 9 is a flowchart illustrating a detailed processing procedure of the occupancy grid map generation control (S104) according to the present embodiment. Processing to be described below is achieved by, for example, the CPU in the control unit 130 reading a program stored in a memory such as a ROM into a RAM and executing the program.

First, in S201, the control unit 130 acquires the moving speed of the moving object 100 from the traveling unit 112. Subsequently, in S202, the control unit 130 determines whether or not the acquired moving speed of the moving object 100 is 0, that is, whether or not the moving object 100 is in a stopped state. If the moving speed is 0, the processing proceeds to S203, and if not, the processing proceeds to S204.

In S203, if the moving object 100 is in the stopped state, the control unit 130 sets 0 to the forgetting rate k_out outside the viewing angle so as not to forget the accumulated obstacle information, and advances the processing to S205. On the other hand, in S204, if the moving object 100 is in the moving state (traveling state), the control unit 130 sets a default value to the forgetting rate outside the viewing angle, and advances the processing to S205. Note that, a predetermined value is set for the forgetting rate k_in inside the viewing angle regardless of the moving speed of the moving object 100.

An example of a method of determining a forgetting rate will be described. A method of determining a forgetting rate is determined on the basis of the following expressions (1) and (2).

$$\text{Accumulated value max} = \text{k\_in/dt*dynamic\_object\_forget\_time} \quad \cdots \text{expression (1)}$$

$$\text{k\_out} = \text{accumulated value max*dt/out\_of\_fov\_forget\_time}$$
$$\cdots \text{expression (2)}$$

Here, "k_in" indicates the in-viewing-angle forgetting rate. "k_out" indicates the out-of-viewing-angle forgetting rate. "dynamic_object_forget_time" indicates an in-viewing-angle forgetting time. "out_of_fov_forget_time" indicates an out-of-viewing-angle forgetting time. "dt" indicates a cycle. By determining the forgetting rate using the above expressions (1) and (2), it is possible to update the obstacle information early inside the viewing angle and emphasize the past obstacle information outside the viewing angle.

In S205, the control unit 130 forgets the accumulated information on the obstacle. The forgetting processing is executed using the following expression (3).

$$\text{map} = \text{map} - \text{k\_in*fovmap} - \text{k\_out} (1 - \text{fovmap}) \qquad \cdots \text{expression (3)}$$

Here, "fovmap" indicates a grid map inside the viewing angle. For example, "fovmap" indicates a grid inside the viewing angle by "1", and indicates a grid outside the viewing angle by "0". According to the expression (3), the forgetting processing is executed by changing the forgetting rate inside and outside the viewing angle as described above. When the forgetting processing is executed, for example, the local map 500 illustrated in FIG. 5 is generated.

Next, in S206, the control unit 130 acquires the obstacle information (for example, the obstacle detection map 510 illustrated in FIG. 5) detected in S103. Subsequently, in S207, the control unit 130 adds the map on which the forgetting processing is performed in S205 and the obstacle detection map acquired in S206 using the following expression (4) to generate an occupancy grid map in which the obstacle information is updated.

$$\text{Map} = \text{map} + \text{k\_acc*new\_map} \qquad \cdots \text{expression (4)}$$

Here, "Map" indicates the occupancy grid map in which the obstacle information is updated, "map" is the obstacle detection map on which the forgetting processing is performed in the above-described S205, and "new_map" indicates the newly detected obstacle detection map acquired in the above-described S206. "k_acc" indicates a coefficient of accumulation. The coefficient is set so as not to be a value equal to or greater than an accumulated value max.

When the processing of S207 ends, the processing of this flowchart ends, and the processing proceeds to S105. Note that, the processing of S201 to S207 is periodically performed, and is performed at a cycle of 10 Hz, for example.

<Summary of embodiments>

1. A moving object control system (e.g. 100) of the above embodiment comprises

accumulating means (303) for accumulating information on an obstacle detected in a past for each divided region obtained by dividing peripheral regions of a moving object;
forgetting means (303) for causing information on the obstacle accumulated by the accumulating means to be forgotten in accordance with a predetermined forgetting rate allocated to each divided region;
imaging means (114) for acquiring a captured image;
detecting means (130, 302, 303) for detecting an obstacle included in the captured image; and
map generating means (303) for generating an occupancy map indicating occupancy of an obstacle for each divided region in accordance with information on the obstacle accumulated by the accumulating means and the obstacle detected by the detecting means for a current peripheral region of the moving object.

According to this embodiment, the forgetting rate of the information of the detected obstacle around the moving object is suitably set for each region. As a result, according to the present invention, it is possible to take measures against a dynamic obstacle, and it is possible to effectively use information on an obstacle detected in the past and to avoid collision with the obstacles and a stack in a dead end.

2. In the moving object control system according to the above embodiment, the predetermined forgetting rate is different between inside and outside a viewing angle of the imaging means (Fig. 6).[0060] According to this embodiment, by switching the forgetting rate between inside and outside of the viewing angle, it is possible to update the obstacle information while effectively using the obstacle information detected in the past.

3. In the moving object control system according to the above embodiment, the forgetting rate inside the viewing angle is higher than the forgetting rate outside the viewing angle (Fig. 6).

According to this embodiment, by updating the obstacle information more quickly inside the viewing angle, it is possible to take measures against a dynamic obstacle accompanied by movement, and by holding the past detection information for a certain period of time outside the viewing angle, it is possible to avoid collision with the obstacle and a stack in a dead end.

4. In the moving object control system according to the above embodiment, a region inside the viewing angle is set to be broader than an imaging range of the imaging means determined by performance of the imaging means (601, Fig. 6).

According to this embodiment, it is possible to reduce erroneous detection of the obstacle due to the detection accuracy in the end region in the captured image.

5. In the moving object control system according to the above embodiment, the moving object control system further comprises: discriminating means for discriminating a type of the detected obstacle, wherein

the predetermined forgetting rate is set for each type of the obstacle.

According to this embodiment, it is possible to effectively use the obstacle information detected in the past according to the type of the obstacle.

6. In the moving object control system according to the above embodiment, the type of the obstacle includes at least a dynamic obstacle accompanied by movement and a static obstacle not accompanied by movement.

According to this embodiment, it is possible to suitably set the forgetting rate according to the dynamic obstacle or the static obstacle.

7. In the moving object control system according to the above embodiment, a forgetting rate set to the dynamic obstacle is higher than a forgetting rate set to the static obstacle.

According to this embodiment, since the dynamic obstacle is accompanied by movement, the obstacle information is forgotten early, and since the static obstacle does not move by itself, the past detection information is held for a certain period of time, whereby it is possible to avoid collision with the obstacle and a stack in a dead end.

8. In the moving object control system according to the above embodiment, the dynamic obstacle is a vehicle or another traffic participant.

According to this embodiment, it is possible to suitably generate the path of the moving object by discriminating a traffic participant as a dynamic obstacle.

9. In the moving object control system according to the above embodiment, the static obstacle is an obstacle that does not move by itself.

According to this embodiment, it is possible to suitably generate the path of the moving object by discriminating the obstacle fixed as a static obstacle.

10. In the moving object control system according to the above embodiment, a forgetting rate of a region including a shadow in the captured image is higher than a forgetting rate of a region not including a shadow in the captured image. According to this embodiment, it is possible to forget early the region including the shadow that lowers the detection accuracy of the obstacle to reduce the influence when erroneous detection occurs.

11. In the moving object control system according to the above embodiment, a forgetting rate is set to be higher as the number of obstacles is larger.

According to this embodiment, it is possible to avoid that path generation is extremely hindered by an obstacle detected in the past.

12. In the moving object control system according to the above embodiment, a forgetting rate is set to be higher as the number of divided regions occupied by the obstacle is larger.

According to this embodiment, it is possible to avoid that path generation is extremely hindered by an obstacle detected in the past.

13. In the moving object control system according to the above embodiment, the map generating means divides a region around the moving object into grid cells, and generates an occupancy grid map indicating occupancy of an obstacle detected by the detecting means for each grid cell as the occupancy map.

According to the present embodiment, a predetermined planar region can be easily divided in x and y directions, and a predetermined range can be covered without omission.

The invention is not limited to the foregoing embodiments, and various variations/changes are possible within the spirit of the invention.

The present application claims priority based on Japanese Patent Application No. 2022-158638 filed on September 30, 2022, the entire contents of which are incorporated herein by reference.

**Claims**

1.  A moving object control system comprising:

    accumulating means for accumulating information on an obstacle detected in a past for each divided region obtained by dividing peripheral regions of a moving object;
    forgetting means for causing information on the obstacle accumulated by the accumulating means to be forgotten in accordance with a predetermined forgetting rate allocated to each divided region;
    imaging means for acquiring a captured image;
    detecting means for detecting an obstacle included in the captured image; and
    map generating means for generating an occupancy map indicating occupancy of an obstacle for each divided region in accordance with information on the obstacle accumulated by the accumulating means and the obstacle detected by the detecting means for a current peripheral region of the moving object.

2.  The moving object control system according to claim 1, wherein the predetermined forgetting rate is different between inside and outside a viewing angle of the imaging means.

3.  The moving object control system according to claim 2, wherein the forgetting rate inside the viewing angle is higher than the forgetting rate outside the viewing angle.

4.  The moving object control system according to claim 2 or 3, wherein a region inside the viewing angle is set to be broader than an imaging range of the imaging means determined by performance of the imaging means.

5.  The moving object control system according to any one of claims 1 to 4, further comprising: discriminating means for discriminating a type of the detected obstacle, wherein
    the predetermined forgetting rate is set for each type of the obstacle.

6.  The moving object control system according to claim 5, wherein the type of the obstacle includes at least a dynamic obstacle accompanied by movement and a static obstacle not accompanied by movement.

7.  The moving object control system according to claim 6, wherein a forgetting rate set to the dynamic obstacle is higher than a forgetting rate set to the static obstacle.

8.  The moving object control system according to claim 6 or 7, wherein the dynamic obstacle is a vehicle or another traffic participant.

9. The moving object control system according to any one of claims 6 to 8, wherein the static obstacle is an obstacle that does not move by itself.

10. The moving object control system according to any one of claims 1 to 9, wherein a forgetting rate of a region including a shadow in the captured image is higher than a forgetting rate of a region not including a shadow in the captured image.

11. The moving object control system according to any one of claims 1 to 10, wherein a forgetting rate is set to be higher as the number of obstacles is larger.

12. The moving object control system according to any one of claims 1 to 11, wherein a forgetting rate is set to be higher as the number of divided regions occupied by the obstacle is larger.

13. The moving object control system according to any one of claims 1 to 12, wherein the map generating means divides a region around the moving object into grid cells, and generates an occupancy grid map indicating occupancy of an obstacle detected by the detecting means for each of the grid cells as the occupancy map.

14. A control method of a moving object control system, comprising:

an accumulating step of accumulating information on an obstacle detected in a past for each of divided regions obtained by dividing a peripheral region of a moving object;
a forgetting step of forgetting the information on the obstacle accumulated in the accumulating step according to a predetermined forgetting rate allocated to each divided region;
an imaging step of acquiring a captured image;
a detecting step of detecting an obstacle included in the captured image; and
a map generating step of generating an occupancy map indicating occupancy of an obstacle for each divided region in accordance with information on the obstacle accumulated in the accumulating step and the obstacle detected in the detecting step for a current peripheral region of the moving object.

15. A program for causing a computer to function as each means of the moving object control system according to any one of claims 1 to 13.

16. A moving object comprising:

accumulating means for accumulating information on an obstacle detected in a past for each divided region obtained by dividing peripheral regions of the moving object;
forgetting means for causing information on the obstacle accumulated by the accumulating means to be forgotten in accordance with a predetermined forgetting rate allocated to each divided region;
imaging means for acquiring a captured image;
detecting means for detecting an obstacle included in the captured image; and
map generating means for generating an occupancy map indicating occupancy of an obstacle for each divided region in accordance with information on the obstacle accumulated by the accumulating means and the obstacle detected by the detecting means for a current peripheral region of the moving object.

# FIG. 1A

# FIG. 1B

# F I G.  2

100

130

114

133

131 OPERATION PANEL

134 GNSS

135

CONTROL UNIT

M ~122a

M ~122b

132

140

136 COMMUNICATION

# FIG. 3

130

CONTROL UNIT

| | |
|---|---|
| USER INSTRUCTION ACQUISITION UNIT | 301 |
| IMAGE INFORMATION PROCESSING UNIT | 302 |
| GRID MAP GENERATION UNIT | 303 |
| PATH GENERATION UNIT | 304 |
| TRAVELING CONTROL UNIT | 305 |

# FIG. 4

400

401

114

100

401

401

F I G. 5

# F I G.  6

SET FORGETTING RATE
TO BE HIGH INSIDE
VIEWING ANGLE

600

603

601

602

100

604

SET FORGETTING RATE
TO BE LOW OUTSIDE
VIEWING ANGLE

604

FIG. 7

**F I G.  8**

```
        ┌─────────┐
        │  START  │
        └────┬────┘
             │                    S101
             ▼
    ┌─────────────────────────────┐
    │     SET TARGET POSITION     │
    └──────────────┬──────────────┘
                   │                S102
                   ▼
    ┌─────────────────────────────┐
    │    ACQUIRE CAPTURED IMAGE    │
    └──────────────┬──────────────┘
                   │                S103
                   ▼
    ┌─────────────────────────────┐
    │       DETECT OBSTACLE       │
    └──────────────┬──────────────┘
                   │                S104
                   ▼
    ╔═════════════════════════════╗
    ║  GENERATE OCCUPANCY GRID MAP ║
    ╚══════════════╤══════════════╝
                   │                S105
                   ▼
    ┌─────────────────────────────┐
    │         GENERATE PATH        │
    └──────────────┬──────────────┘
                   │                S106
                   ▼
    ┌─────────────────────────────┐
    │       TRAVELING CONTROL      │
    └──────────────┬──────────────┘
                   │                S107
                   ▼
         ◇─────────────────◇
  NO     │  REACHED TARGET │
◄────────┤    POSITION?    │
         ◇─────────────────◇
                   │ YES
                   ▼
              ┌─────────┐
              │   END   │
              └─────────┘
```

# F I G. 9

S104

**S201**
ACQUIRE SPEED OF MOVING BODY

**S202**
SPEED = 0?

NO

YES

**S203**
kout=0

**S204**
kout = kout (default)

**S205**
FORGET ACCUMULATED INFORMATION

**S206**
ACQUIRE OBSTACLE INFORMATION DETECTED

**S207**
UPDATE ACCUMULATED MAP

END

## INTERNATIONAL SEARCH REPORT

| International application No. |
|---|
| **PCT/JP2023/031633** |

| A. | CLASSIFICATION OF SUBJECT MATTER |
|---|---|

*G05D 1/02*(2020.01)i
FI:  G05D1/02 H

According to International Patent Classification (IPC) or to both national classification and IPC

| B. | FIELDS SEARCHED |
|---|---|

Minimum documentation searched (classification system followed by classification symbols)

G05D1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2022-46408 A (PREFERRED ROBOTICS INC.) 23 March 2022 (2022-03-23) paragraphs [0008]-[0083], fig. 1-16 | 1-9, 11-16 |
| A | | 10 |
| Y | JP 2010-26727 A (PANASONIC CORP.) 04 February 2010 (2010-02-04) paragraphs [0004], [0072]-[0073] | 1-9, 11-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/031633**

| Patent document cited in search report | | | Publication date (day/month/year) | Patent family member(s) | Publication date (day/month/year) |
|---|---|---|---|---|---|
| JP | 2022-46408 | A | 23 March 2022 | (Family: none) | |
| JP | 2010-26727 | A | 04 February 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010102485 A
- JP 2017532234 A
- JP 2019057197 A
- JP 2022158638 A